# EUROPEAN PATENT APPLICATION

(11) **EP 1 256 505 A2**
(43) Date of publication of application: **13.11.2002**
(21) Application number: 02010428.7
(22) Date of filing: 08.05.2002
(51) Int. Cl.: B62B 7/08

(54) **Perambulator**

(30) Priority: 09.05.2001 DK 200100733
(71) Applicant: Odder Barnevogsnfabrik A/S, 8300 Odder (DK)
(72) Inventor: Koch, Simon Gadegaard, 8200 Aarhus N (DK)
(74) Representative: Gregersen, Niels Henrik

(57) **Abstract**

Commonly known prams of the collapsible type are designed so that the pram wheels are easily detached, and the entire underframe may thus be folded down to a storage or transport position, in which it appears with low overall height or thickness. However, by the invention it has been realised that the overall height can be further reduced by the springs (30) being constituted by mainly horizontally oriented springs (30) which act directly on the scissor frame (4) between opposite branches (8, 9) thereof, as the scissor frame (4) and the carriage body (2) are slidingly interconnected, whereby the scissor frame (4) hereby can be allowed to perform resilient, operative foldings up and down. Hereby is the commonly occurring underframe is made redundant, a fact enabling a reduced overall height.

## Description

The present invention concerns a perambulator including a detachable carriage body including a bottom, which by coupling members is fastened to a collapsible underframe of the scissor type, provided with wheels and springs for resilient support of the carriage body, and a handle bracket connected with the scissors frame by articulated member by which the scissors frame is brought to folding down by a rearwards-downwards pivoting of the handle bracket after releasing the latter.

The task of the underframe is to form basis for a resilient support of the carriage body, and usually this is achieved by the underframe being constituted by a rigid, wheel-carrying underframe with upright bracket parts to which an upright scissors frame is fastened via respective springs, the scissors frame having coupling members at the top for releasable attachment of the carriage body. Furthermore, the scissors frame is connected by articulated joint with a handle bracket in such a way that the scissors frame is brought to folding down by a rearwards-downwards pivoting of the handle bracket after releasing the latter. The pram wheels are easily detached, and the whole underframe may thus be collapsed into a storage or transport position in which it appears with low overall height or thickness.

However, it would be desirable if just this dimension could be further reduced, e.g. with regard to space requirement by transport of the frame in the boot of cars, but this would require disconnecting the springs from either the underframe or the scissors frame, whereby the operation becomes difficult. Normally, it would be considered of importance that springs appear both at the front and the back and at both sides of the scissors frame or underframe for achieving good driving comfort when using the perambulator.

By the invention it has been realised that this problem can be solved in a simpler way, namely by not using "hanging springs", but by the springs being constituted by mainly horizontally oriented springs, which act directly on the scissors frame between opposite branches thereof, as the scissors frame and the carriage body are slidingly interconnected, whereby the scissors frame is allowed to perform resilient, operative foldings down and up for full imitation of the action of the "hanging springs". The immediate result would be that the spring system only has to be loosened at one end for collapsing the underframe. Loosening the spring system on the perambulator according to the invention will not, however, be necessary, as the applied springs can be directionally stabilised in such a way that they may participate in collapsing the scissors frame by rearwards pivoting down of the handle bracket.

From FR 2 644 745 is known a lightweight promenade pram for transporting children in sitting position. The indicated promenade pram is built up of a triangular tube structure and comprises a horizontally oriented tube section between two inclining and wheel carrying tube members thereunder. The promenade pram is sprung by the horizontal tube section is divided in two, and where one end encloses a part of the other end by a cylindrical section in which there is provided a spring device between the ends of the tube section, which results in that the tube sections can be displaced axially under the action of the spring. Since it is the intention with the pram to avoid fixed installations between the wheels in the scissors frame with regard to reducing the space taken up by the collapsed pram, the suspension indicated in the above publication is not relevant.

For the resilient mobility in question of the scissors frame it is required that the opposite upper and lower ends of this frame can be moved towards and away from each other while maintaining the spring action, which may occur by a sliding connection with the underframe and with a carrying frame for the undercarriage, respectively.

However, it is a mark of the invention that such frames can be done without completely as the scissors frame can be supporting directly for respective pairs of front and rear wheels, respectively, wheras the upper ends can be in releasable, fixed and sliding connection, respectively, with the carriage body itself, preferably with a fixed bottom frame in the latter.

With the purpose of further reducing the height of the collapsed scissors frame, the wheels may therefore be detachable.

With the purpose of facilitating the manoeuvring of the perambulator, one set of wheels can be rotatably suspended about a mainly vertically oriented axis.

A bottom frame can be done completely without as the front and rear wheels carried by the scissors frame will only perform relative movements towards and away from each other during the spring action of this frame. Furthermore, a carrying top frame can be done without when the upper ends of the scissor frame can interact directly with the bottom of the carriage body, or its bottom frame, by a releasable fixed connection with one scissors branch and by a releasable sliding connection with the other scissors branch, respectively.

The use of an underframe will thus only serve the purpose of utilising this as a platform for transporting luggage etc., and such will thus constitute an extra equipment for a perambulator according to the invention. An appearing underframe is thus to be fastened to the scissors frame by a releasable fixed connection with one scissors branch and by a releasable sliding connection with the other scissors branch, respectively. However, it is a prerequisite that a possible underframe is completely removed before a collapsing of the perambulator is executed.

The underframe may advantageously be made with upright sides or folding up sides and with a bottom adjoining the sides. Hereby is achieved that the underframe for carrying luggage etc can be collapsed so that it does not take up any appreciable space. The underframe may also be designed in a rigid wire netting.

By the invention it has been found that by utilising the possibilities discussed here, it is completely realistic to make the frame parts of the perambulator in a light metal such as aluminium, whereby the entire frame can appear in lightweight version. Furthermore, hereby is provided the opportunity of making extruded sections which particularly make allowance for the structural needs in the underframe, whereby this may be further simplified.

However, it will also be possible to make the frame parts of the perambulator of plastic. The plastic may furthermore be fibre reinforced.

The invention is explained more closely in the following with reference to the drawing on which:
- Fig. 1: is a side view of a perambulator according to the invention,
- Fig. 2: is a perspective view of the scissors frame and carriage body of the perambulator,
- Fig. 3: is a corresponding view of the frame in an intermediate folding position,
- Fig. 4: is a corresponding view of the fully collapsed frame, and
- Fig. 5: is the same as shown in Fig. 4, but where the wheels are dismounted.

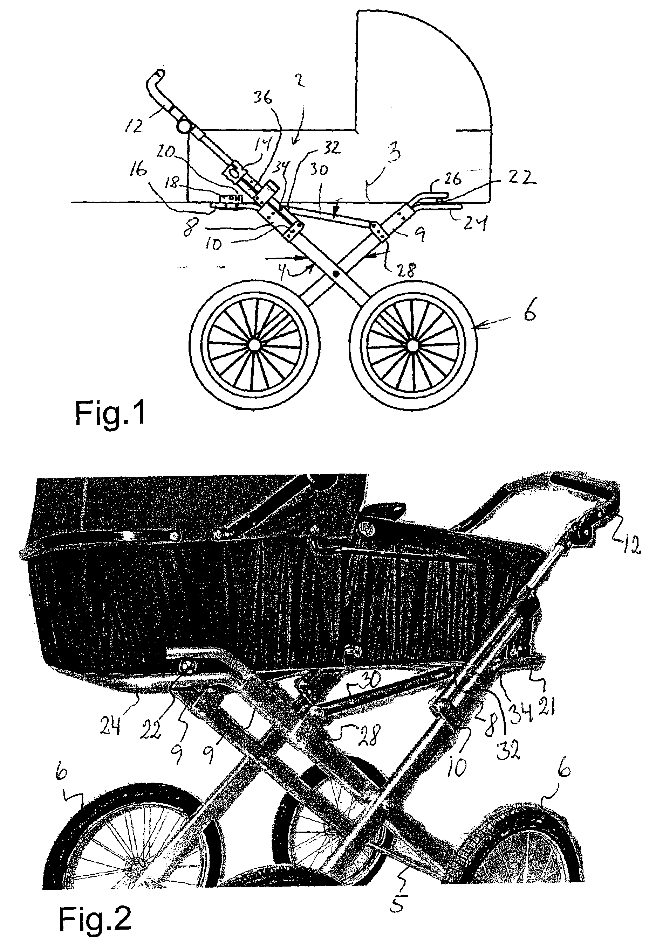

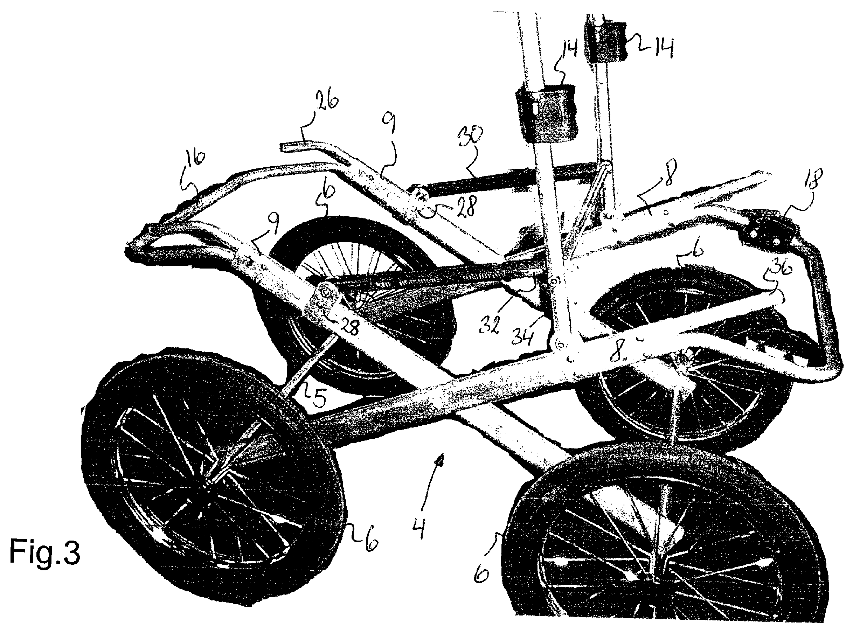

The perambulator shown in Fig. 1 has a carriage body 2 with a bottom 3, which is disposed upon an underlying scissors frame 4, the opposite lower branches of which have transverse axles 5 or journals for releasable fastening of respective pram wheels 6. The upper scissors branches 8 at the handle end of the perambulator are provided with fittings 10, which rotatably hold the lower ends of a handle bracket 12, which are also held fast to the upper ends of the branches 8, namely by means of releasable coupling fittings 14, so that the whole handle bracket 12 can be released in a way otherwise known per se at the fittings 14 for return pivoting above the frame about the fittings 10, when the frame is to be folded, see also Figs. 3, 4 and 5.

The carriage body 2 is supported at the front on a transverse bracket part 16, which is branched off from the other scissor branch parts 8. The side sections of this part, which extends along the bottom 3 of the carriage body 2, are made with a fitting 18 having a notch 20 for receiving respective engaging studs 21, which project laterally from the bottom of the carriage body 3. At the rear, the carriage body 2 is carried by means of corresponding lateral studs 22 at each side between a pair of forked branches 24,26 that form horizontal extensions of the rearmost, upper scissor branches 9.

When mounting the carriage body 2, the studs 22 can be lowered upon the lowermost and longest of the fork branches 24, after which the carriage body is displaced slightly forward for lowering the front studs 21 into the notches 10, whereby the studs 22 are brought to vertically locked position between the fork branches 24 and 26.

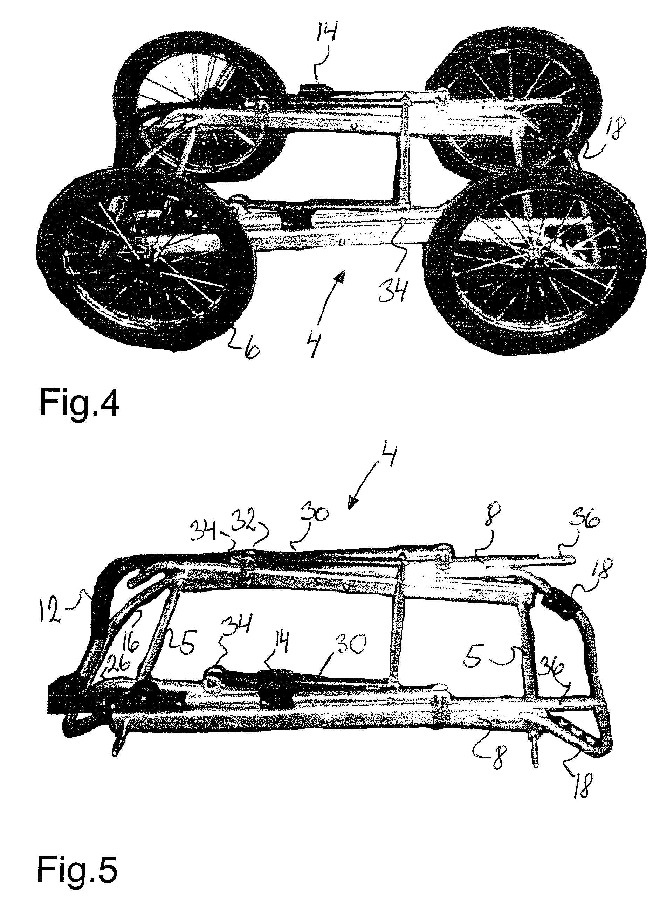

Opposite the fittings 10 on the scissor branch parts 8, on the scissor branch parts 9 there are provided fittings which are pivotably holding one end of respective tube sections 30 having a main section 32 at their other end, the section 32 being pivotably connected to a point 34 on the associated side part of the handle bracket 12, namely an adapted piece above the fitting 10. The geometry is thus adapted so that the pipe section 30 will appear as an articulated joint which, by rearward laying down of the handle bracket 12 appearing from Fig. 3 for collapsing the perambulator, will control the collapsing of the scissor frame for achieving that the latter is completely collapsed at the point when the handle bracket 12 is completely turned down, i.e. for achieving that the whole carriage frame is collapsed for least filling up in height, cf. Fig. 4. This is well-known per se from other types of perambulators, such as diverse strollers or prams with diverse suspension devices, which are not visibly appearing on the perambulator according to the invention.

However, the tube section 30 is not a rigid joint, as a tensile spring is provided inside the tube and inserted between the main section 32 and the opposite end of the tube 30 at the fitting 28. When the perambulator is not loaded, the main section 32 will be drawn against the front end of the tube 30, but by a typical load on the perambulator, the main section 32 will be drawn some way out from this fore end, corresponding to a slight initial collapsing of the scissor frame. From this follows that the "spring" 30 in operation will be active for establishing the desired resiliency of the whole suspension of the carriage body 3 with respect to both positive and negative G-actions.

Hereby it is of importance that the upper ends of the scissor branches 8 and 9 may more or less freely change their mutual horizontal distance, but this will be achievable just by the described suspension of the carriage body by which the carrier studs 22 are sliding freely horizontally between the fork branches 24 and 26. The perambulator can hereby display a suspension which fully meets relevant expectations without the used traditional spring elements.

Correspondingly, the resilient foldings of the scissor frame 4 can occur freely under horizontal mutual displacement of the front and rear pram wheels 6, which do not show any other mutual connection right through the scissor frame 4.

In a not shown embodiment of the perambulator according to the invention, on the axle connections 5 between the wheels 6 there may be provided a releasably attached frame, one end of which being releasably fastened to one axle connection, and the other end of which being slidingly suspended at the other axle connection, e.g. in the same way as the carriage body 2 is fastened to the upper branches 8,9 of the scissor frame. The frame may designed as a wire netting, the rims of which comprise upright or folding up sides, so that this hereby appears as a basket for use in transporting items, like the commonly known perambulators comprising an underframe. It is presupposed the underframe is removed before a subsequent collapsing of the scissor frame 4, and by the underframe being provided with folding up sides this means that this is also collapsible so that the space requirement for this during transport or storage becomes very small.

By the perambulator according to the invention, the frame parts are generally made in aluminium so that the frame is distinguished by great lightness.

As it appears from Fig. 2, the scissor forks 8, 9 are made as upright sectional members with two internal ducts which then, at the upper ends of the branches 9, can accommodate the ends of the elements 24 and 26, while they, at the branches 8, can accommodate the ends of the bracket part 16 and a straight extension tube 36, respectively, for carrying the release fitting 14. Hereby, the fastening of the extra elements in question may be effected in a very discreet way at the same time as the scissor branches, in spite of the light material, will appear with great stiffness in the relevant load direction.

In another, not shown embodiment of the perambulator according to the invention, the set of wheel on one lower scissor branch can be rotatably journalled about a vertical axis, like the known swivelling wheels, whereby manoeuvring with the perambulator may be facilitated.

## Claims

1. A perambulator including a detachable carriage body (2) including a bottom (3), which by coupling members is fastened to a collapsible underframe (4) of the scissor type, provided with wheels (6) and springs (30) for resilient support of the carriage body (2), and a handle bracket (12) connected with the scissors frame by articulated member by which the scissors frame (4) is brought to folding down by a rearwards-downwards pivoting of the handle bracket (12) after releasing the latter, **characterised in that** the springs (30) are constituted by mainly horizontally oriented springs (30) which act directly on the scissors frame (4) between opposite branches (8,9) thereof, as the scissors frame (4) and the carriage body (2) are slidingly interconnected, whereby the scissors frame (4) is allowed to perform resilient, operative foldings down and up.

2. A perambulator according to claim 1, **characterised in that** the springs (30) are directionally stabilised so that they may participate in a collapsing of the scissors frame (4) by rearward pivoting down of the handle bracket (12).

3. A perambulator according to claim 1 or 2, **characterised in that** the scissors frame (4) by itself constitutes the support frame for the carriage body (2).

4. A perambulator according to any of claims 1 - 3, **characterised in that** scissors frame (4) is directly carrying respective pairs of front and rear wheels (6), which preferably are detachable.

5. A perambulator according to claim 4, **characterised in that** the front or rear wheels (6) are rotatably journalled about a mainly vertically oriented axis.

6. A perambulator according to claim 4 or 5, **characterised in that** the upper ends of the scissors frame interact with the carriage body itself by a releasable fixed connection (18, 20, 21) with one scissors branch (8) and by a releasable sliding connection (22, 24 , 26) with the other scissors branch (9), respectively.

7. A perambulator according to any of claims 1 - 6, **characterised in that** the carriage body (2) preferably includes a bottom frame to which is fastened projecting studs (21, 22) constituting a part of the releasable fixed connection and the sliding connection, respectively.

8. A perambulator according to any of claims 1 - 7, **characterised in that** it includes a detachable, mainly horizontally oriented lower frame fastened to the lower part of the scissors frame by a releasable fixed connection with one scissors branch and by a releasable sliding connection with the other scissors branch, respectively.

9. A perambulator according to claim 8, **characterised in that** the lower frame is designed with upwardly folding or upright sides and with a bottom adjoining the said sides.

10. A perambulator according to claim 8 or 9, **characterised in that** the lower frame and the sides are designed in a rigid wire netting.

11. A perambulator according to any of claims 1 - 10, **characterised in that** the frame parts are partly or entirely made up of a light metal such as aluminium.

12. A perambulator according to any of claims 1 - 11, **characterised in that** the frame parts are partly or entirely made up of plastic, possibly with fibre reinforcement.

13. A perambulator according to claim 11 or 12, **characterised in that** the frame parts are constituted by extruded sections.
